# EUROPÄISCHE PATENTSCHRIFT

(11) **EP 1 331 072 B1**
(45) Veröffentlichungstag und Bekanntmachung des Hinweises auf die Patenterteilung: **22.09.2004**
(21) Anmeldenummer: 02001853.7
(22) Anmeldetag: 28.01.2002
(51) Int. Cl.: B29B 7/60, B01F 15/02

(54) **Verfahren und Vorrichtung zur gesteuerten Entnahme von flüssigen Materialien aus mehreren Vorlagebehältern**
Process and apparatus for the controlled removal of fluent materials from several receptacles
Procédé et dispositif pour le déchargement controlé de matériaux fluides à partir de plusieurs récipients d'alimentation

(43) Veröffentlichungstag der Anmeldung: 30.07.2003
(73) Patentinhaber: ELAST Kunststofftechnik GmbH & Co. KEG, 4730 Heiligenberg (AT); ELMET Elastomere Produktions- und Dienstleistungs-GmbH, 4064 Oftering-Trindorf (AT)
(72) Erfinder: Adlesgruber, Karl, 4511 Allhaming (AT); Fattinger, Paul, 4730 Heiligenburg (AT); Manigatter, Kurt, 4072 Alkoven (AT); Reslhuber, Christian, 4491 Niederneukirchen (AT)
(74) Vertreter: Schön, Theodor, Patent- und Zivilingenieur

(56) Entgegenhaltungen:
- EP-A- 0 112 638
- EP-A- 0 904 927
- WO-A-96/26057
- DE-A- 2 705 223
- US-A- 4 167 151

## Beschreibung

Die vorliegende Erfindung betrifft ein Verfahren und eine Vorrichtung zur gesteuerten Entnahme von flüssigen Materialien aus mehreren Vorlagebehältern und Zuführung dieser Substanzen zu einem Mischaggregat.

US 4,167,151 schützt eine automatische Besprüheinrichtung zur Beschichtung von Gegenständen mit Polyurethanüberzügen, welche unmittelbar vor dem Aufsprühen aus zwei flüssigen Komponenten gemischt werden.

Derartige Vorrichtungen werden eingesetzt, um Kunststoffspritzgussmassen, welche unmittelbar vor ihrer Zuführung zur Formeinrichtung miteinander vermischt werden im gewünschten Mischungsverhältnis zusammen zu setzen. So setzen sich etwa Silikonspritzgussteile aus zwei unterschiedlichen Komponenten zusammen, wobei bisher die Komponenten so aufeinander abgestimmt sind, dass ihr Mischungsverhältnis etwa 50 : 50 entspricht.

Die Vorlagebehälter sind üblicherweise unmittelbar nebeneinander angeordnet. Die Vorlagematerialien sind vom Hersteller jeweils aufeinander abgestimmt. Es ist daher notwendig, immer zueinander gehörige Vorlagebehälter gleichzeitig zu betreiben. Sobald ein Vorlagebehälter entleert ist, müssen daher beide Vorlagebehälter ausgewechselt werden. Dabei sind auch die das Vorlagematerial berührenden T eile der Vorrichtung bei jedem Wechsel zu reinigen. Die derzeit üblichen Vorlagebehälter weisen Fassungsvolumen von 20 oder 200 Liter auf. Dabei wird von den Anwendern wegen der geringeren Richtzeit, welche insbesondere für die Reinigung aufgewendet werden muss, den 200 Liter Gebinden oft der Vorzug gegeben, obwohl diese aufgrund des hohen Gewichtes schwerer zu manipulieren sind.

Auf jeden Behälter wird eine sogenannte Folgeplatte aufgesetzt, welche eine Ventilöffnung aufweist, wobei dieses Ventil bei der Berührung der Folgeplatte mit der Substanz öffnet und vorhandene Luft im Behälter entweichen lässt. Dieser Vorgang wird durch anlegen eines vorbestimmten Druckes auf die Folgeplatte unterstützt. Sobald die Entlüftung abgeschlossen ist, wird das Ventil geschlossen. Anschließend wird eine von einem Pneumatikzylinder angetriebene Schöpfkolbenpumpe in das Material eingetaucht. Über den Eintauchtakt wird die Entnahmemenge der flüssigen Substanz gesteuert. Die Schöpfkolbenpumpe leitet das entnommene Material einem Mischkanal zu, in welchem die Substanz mit einer weiteren flüssigen Komponente vermengt wird.

Bekannte Vorrichtungen der genannten Art welche das geforderte Mischungsverhältnis von 50 : 50 bewirken sollen, berücksichtigen jedoch nicht, dass das Vorlagematerial aufgrund unterschiedlicher Viskositäten in geringfügig unterschiedlichen Mengen von den Schöpfkolbenpumpen gefördert wird. Dadurch kommt es zu einer ungleichmäßigen Entleerung der beiden Vorlagebehälter.

Um hier Abhilfe zu schaffen, schlägt die EP 0 112 638 ein Gerät zum Mischen und Abgeben eines Fluides vor, welches zwei Vorratsbehälter für zwei unterschiedliche Fluide aufweist. Jedem Vorratsbehälter ist eine Förderpumpe zugeordnet. Weiters sind eine Antriebseinrichtung für die Pumpen, eine Einrichtung, welche die Pumpen miteinander verbindet, um Fluid aus den Vorratsbehältern in proportionierter Weise mit einem vorbestimmten Volumenverhältnis zu pumpen, ein Mischkopf mit Einlasskanälen, welche in Fluidverbindung mit Auslasskanälen der jeweiligen Pumpen sind, vorgesehen. Die Pumpen werden von der Antriebseinheit mit entsprechenden Geschwindigkeiten angetrieben, welche umgekehrt proportional zu den jeweiligen Viskositäten des gepumpten Fluides sind. Weiters sind Einrichtungen in Verbindung mit der Einlassseite der Pumpen vorgesehen, um festzustellen, wann ein Vorratsbehälter geleert ist, damit der Antrieb der Pumpen rechtzeitig eingestellt werden kann.

Als Folge bleibt in einem der Vorlagebehälter eine Restmenge, welche bis zu 10% des Füllvolumens ausmachen kann. Bei einem Füllvolumen von 200 Liter verbleiben somit bis zu 20 Liter Restmenge, welche nicht mehr verwendet werden können und somit der Sondermüllentsorgung zugeführt werden m üssen. Neben dem enormen ökologischen P roblem bedeutet diese Restmengenentsorgung für den Betreiber der Anlage auch einen erheblichen finanziellen Aufwand.

Verbesserte Anlagen für diesen Einsatzzweck verfügen über eine Steuerungseinrichtung, welche auf dieses Viskositätsproblem insofern Rücksicht nehmen, dass eine exakte 50:50 - Förderung möglich wird. So ist aus EP 0 904 927 eine Einrichtung zum Einspritzen eines aus mindestens zwei Komponenten bestehenden Kunststoffes in eine Form bekannt, wobei die Komponenten über eine volumetrische Dosiereinheit einer Mischeinrichtung und über diese einem Einspritzzylinder zugeführt werden.

DE 27 05 223 beschreib eine ähnliche Vorrichtung, welche eine Messstation aufweist, welche die Volumina der einzelnen Flüssigkeiten mit hoher Genauigkeit abmisst, unabhängig von deren Viskositäten.

Diese Anlagen sind sehr teuer. Ein weiterer, wesentlich schwerwiegenderer Nachteil dieser Anlagen besteht darin, dass sie keine Rücksicht auf eventuell unterschiedliche Füllvolumina der Vorlagebehälter nehmen können.

Ebenfalls nachteilig bei bekannten Vorrichtungen ist der Umstand, dass die Folgeplatten üblicherweise so ausgebildet sind, dass ihre auf der Flüssigkeit aufliegende Fläche von vorstehenden oder versenkten Befestigungseinrichtungen, wie etwa Schraubmuttern oder ähnlichem, durchsetzt ist. Dadurch wird es unmöglich gemacht, diese Fläche bis zur vollständigen Entleerung des Vorlagebehälters absenken zu können bzw. wird ihre Reinigung erheblich erschwert.

Für die Qualität des Endproduktes ist eine exakte Einhaltung der 50:50 Födermenge nicht unbedingt erforderlich. Geringe Abweichungen von dieser Herstellervorgabe sind ohne Qualitätseinbußen beim Endprodukt durchaus möglich und tolerierbar. Viel wesentlicher wäre es, keine Restmengen im Vorlagebehälter hinnehmen zu müssen. Da die Vorlagebehälter jedoch bei den Füllhöhen bis zu etwa 8 cm unterschiedlich gefüllt sein können, was bei einem Füllvolumen von 200 Liter einer Menge von etwa 15 kg entspricht, können auch bei einer exakten 50:50-Steuerung Restmengen anfallen, welcher der Sondermüllentsorgung zugeführt werden müssen.

Die vorliegende Erfindung stellt sich daher die Aufgabe, ein Verfahren für die Steuerung einer Vorrichtung der eingangs genannten Art zu schaffen, deren Ziel die restlose Entleerung der Vorlagebehälter ist. Diese Aufgabe wird durch die im Anspruch 1 angegebenen Merkmale gelöst. Vorteilhafte Weiterentwicklungen dieses Verfahrens werden in den abhängigen Ansprüchen 2 bis 5 angeführt.

Desweiteren stellt sich die Erfindung die Aufgabe, eine Vorrichtung zu schaffen, welche nach dem erfindungsgemäßen Verfahren betrieben werden kann, wobei in einer verbesserten Ausführungsform dem Umstand Rechnung getragen werden soll, dass die vollständige Entleerung der Vorlagebehälter nicht durch störende Befestigungseinrichtungen an der Unterseite der Folgeplatten eingeschränkt werden soll.

Weiters stellt sich die Erfindung die Aufgabe eine möglichst einfache, wenig kraftraubende Manipulierbarkeit beim Wechsel der Vorlagebehälter zu ermöglichen und den Zeitaufwand für den Wechsel von einem Vorlagebehälter zu einem nachfolgenden Vorlagebehälter zeitsparend zu gestalten, wobei die Reinigung der das Vorlagematerial berührenden Seite der Folgeplatte möglichst rasch und einfach erfolgen soll.

Diese Aufgaben werden durch die im Anspruch 6 angegebenen Merkmale gelöst. Vorteilhafte Weiterentwicklungen sind Gegenstand der folgenden Unteransprüche.

Beide Vorlagebehälter werden zeitgleich gewechselt. Beim Start wird nach der Entlüftung die Füllstandshöhe ermittelt. Daraus errechnet die Steuerung das optimale Mischungsverhältnis, welches innerhalb vorgegebener Toleranzgrenzen liegen muß. Dieses optimale Mischungsverhältnis wird durch die Ansteuerung der einzelnen Schöpfkolbenpumpen mit unterschiedlichen Impulsfrequenzen angestrebt. Aufgrund der unterschiedlichen Komprimierbarkeit der Vorlagematerialien kommt es jedoch im Laufe der Entleerung des Vorlagebehälters wieder zu Abweichungen im Verhältnis der Füllstände der einzelnen Vorlagebehälter. Diese Abweichungen werden vom Steuerungssystem erkannt und bei der Berechnung der Impulsfrequenz laufend berücksichtigt.

Mit dem erfindungsgemäßen Verfahren und der danach betriebenen Vorrichtung wird es künftig auch möglich, Vorlagematerialien miteinander zu mischen, deren Mischungsverhältnis nicht 1:1 beträgt, sondern etwa auch bei 1:3 liegen kann. Solche Änderungen bei den Vorlagematerialien sind mit der erfindungsgemäßen Vorrichtung sofort realisierbar, ohne dass Umbauten erforderlich werden. Es ist lediglich nötig, ein anderes Steuerungsprogramm zu fahren.

Um die Befüllung der Vorrichtung auch mit schweren 200 Liter fassenden Vorlagebehälter möglichst kraftschonend und einfach zu ermöglichen, weist die Standplatte in ihrer Höhe versetzte Bereiche für die Montage von Transportrollen auf. Dadurch kann die Standplatte sehr bodennahe angeordnet und die vollen Vorlagebehälter können auf einfache Weise auf diese Standplatte gekippt werden.

Um die Rüstzeit beim Wechsel der Vorlagebehälter zu reduzieren, werden die Folgeplatten so an der Vorrichtung befestigt, dass keine vorstehenden Schraubenköpfe auf der die Flüssigkeitsoberfläche berührenden Seite der Folgeplatte vorstehen. Dadurch kann der Reinigungsvorgang rascher und einfacher durchgeführt werden.

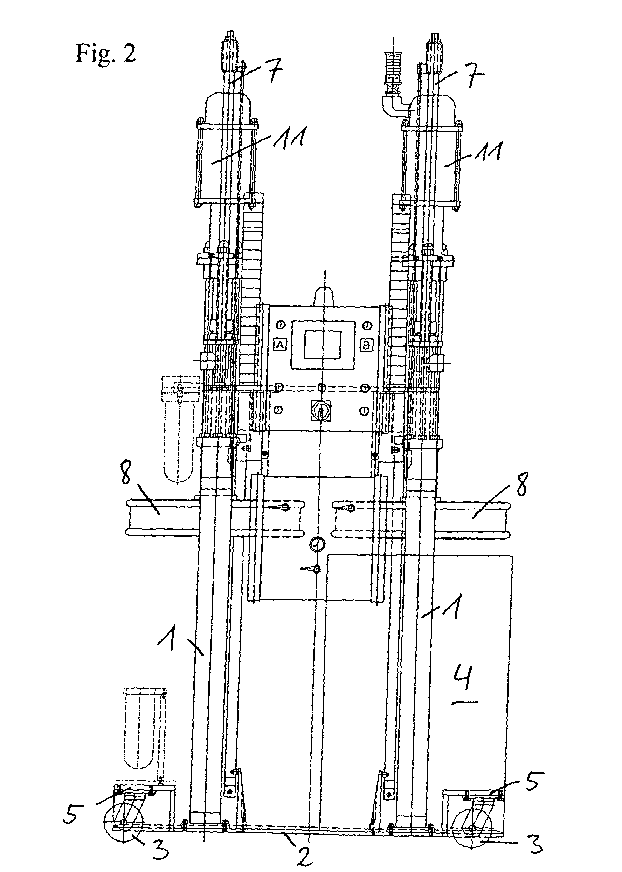

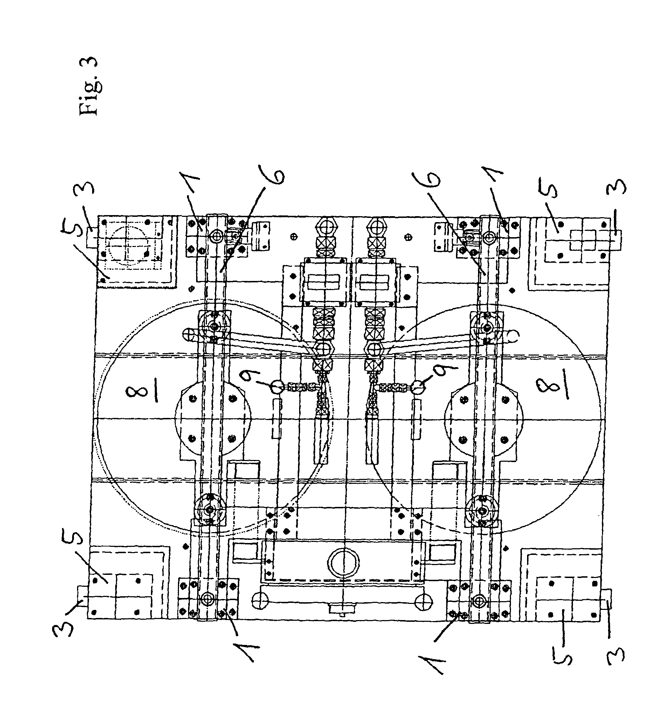

Die erfindungsgemäße Vorrichtung wird anhand der Figuren näher erläutert. Darin zeigt Fig. 1 eine Seitenansicht der erfindungsgemäßen Vorrichtung. Fig. 2 zeigt eine weitere, um 90 Grad gedrehte Seitenansicht der Vorrichtung. Fig. 3 zeigt eine Aufsicht derselben Vorrichtung.

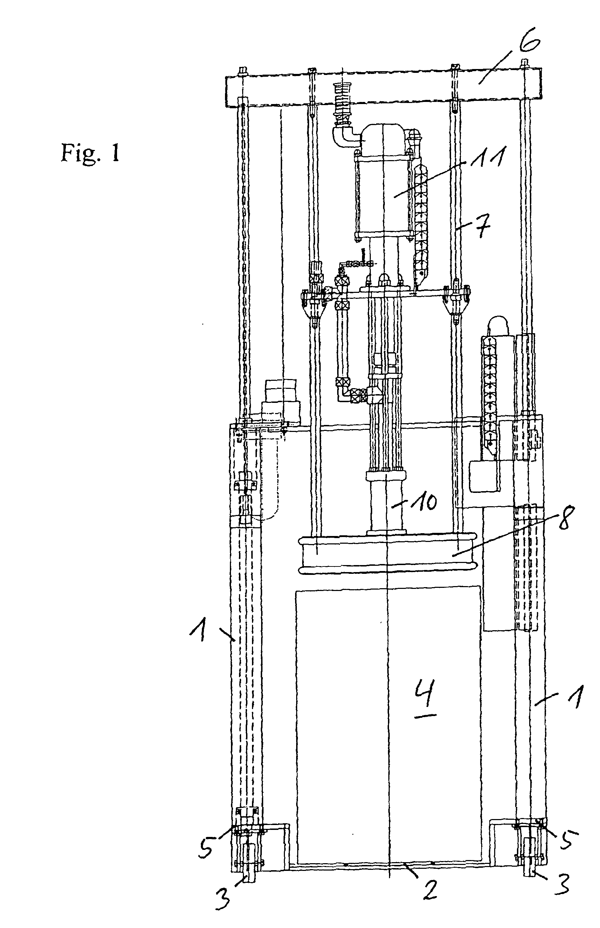

Wie aus Fig. 1 hervorgeht, besteht die erfindungsgemäße Vorrichtung aus einem Haltegestell 1, welches mit einer Standplatte 2 befestigt ist, wobei der Standort der Vorrichtung über Rollen 3 mit minimalem Kraftaufwand veränderbar ist. Die Standfläche ist so dimensioniert, dass sie zur Aufname von zwei Gebinden 4 zu jeweils 200 Liter Fassungsvolumen geeignet ist. Um diese Gebinde 4 möglichst einfach auf die Standfläche 2 kippen zu können, sind die Bereiche 5 zur Befestigung der Rollen 3 in Bezug zur Standfläche 2 höhenversetzt angeordnet. An je einem Querbalken 6 des Haltegestells 1 ist eine weitere Haltevorrichtung 7 angeordnet, welche eine Folgeplatte 8 mit einer hier nicht sichtbaren Ventilöffnung 9 auf die Oberfläche der Vorlageflüssigkeit absinken läßt. Darüber ist ein von einem Gehäuse 10 ummantelter Pneumatikzylinder mit einer getaktet geführten Schöpfkolbenpumpe angeordnet. Diese Schöpfkolbenpumpe wird über einen Motor 11 mit einem programmgesteuerten Eintauchtakt in die Vorlageflüssigkeit eingetaucht.

## Patentansprüche

1. Verfahren für die Steuerung einer Vorrichtung zur Entnahme von flüssigen Materialien aus mehreren Vorlagebehältern und Zuführung dieser Substanzen zu einer Mischeinrichtung, wobei eine Folgeplatte (8) auf der Flüssigkeitsoberfläche aufliegt und das Material aus dem Vorlagebehälter (4) über eine Schöpfkolbenpumpe, welche von einem Motor (11) über einen Pneumatikzylinder angetrieben wird, entnommen und der Mischeinrichtung zugeführt wird, wobei die Menge des entnommenen Materials pro Zeiteinheit über die Taktung der Schöpfkolbenpumpe erfolgt **dadurch gekennzeichnet, dass** die Taktung abhängig vom Füllstand im Vorlagebehälter und abhängig von der Viskosität des Vorlagematerials gesteuert wird.

2. Verfahren nach Anspruch 1, **dadurch gekennzeichnet, dass** die Füllstandshöhe unmittelbar nach der Entlüftung bestimmt und diese Information an einen Impulsfrequenzgeber weitergeleitet wird, worauf der Impulsfrequenzgeber die Impulsfrequenz jedes einzelnen Motors (11) nach dem Verhältnis der einzelnen Füllstandshöhen zueinander dergestalt berechnet, dass beide Vorlagebehälter (4) zeitgleich entleert sind.

3. Verfahren nach Anspruch 1 oder 2, **dadurch gekennzeichnet, dass** eine Steuerungseinheit das Mengenverhältnis der Komponenten berechnet und die Einhaltung von vorgegebenen Toleranzgrenzen überwacht

4. Verfahren nach Anspruch 1, 2 oder 3, **dadurch gekennzeichnet, dass** Sensoren kontinuierlich während des Entleerungsvorganges den Füllstand jedes Vorlagebehälters (4) messen und die Steuerung Abweichungen der Füllstandshöhen zueinander, welche nicht auf die ursprünglich eingestellte Impulsfrequenz zurück zu führen sind als solche erkennt und eine Nachjustierung der Impulsfrequenzen bewirkt.

5. Verfahren nach einem der Ansprüche 1 bis 4, **dadurch gekennzeichnet, dass** der Druck, mit welchem die Folgeplatten (8) beaufschlagt werden abhängig ist von der Viskosität des Vorlagematerials.

6. Vorrichtung zur vollständigen Leerung von flüssiges Material enthaltenden Vorlagebehältern und Zuführung dieser Materialien an eine Mischeinrichtung für Einrichtungen von Spritzgußmaschinen , bestehend aus einem Gestell(1), einer Standplatte (2) für die Aufnahme und den Transport der Vorlagebehälter (4), einer Haltevorrichtung (7) für Folgeplatten (8) und Schöpfkolbenpumpen (10) samt Motoren (11), Folgeplatten (8), welche auf den Flüssigkeitsoberflächen aufliegen und Schöpfkolbenpumpen (10), welche von Motoren (11) über Pneumatikzylinder angetrieben werden, **dadurch gekennzeichnet, daß** die Vorrichtung Sensoren zur laufenden Ermittlung der Füllstandshöhe der Vorlagebehälter (4), eine Rechen-und Steuereinheit, welche auf der Basis der aktuellen Füllstandshöhen der Vorlagebehälter (4) die aktuelle Impulsfrequenz der Motoren (11) ermittelt und eine Anzeigevorrichtung zur Darstellung der aktuellen Restmenge in den Vorlagebehältern (4) und deren Verhältnis zueinander aufweist.

7. Vorrichtung nach Anspruch 6, **dadurch gekennzeichnet, dass** ein Datenspeicher vorhanden ist, der kontinuierlich die Sensordaten aufzeichnet.

8. Vorrichtung nach Anspruch 6, **dadurch gekennzeichnet, dass** die Standplatte (2) für die Vorlagebehälter (4) in ihrer Höhe versetzte Bereiche (5) für die Montage von Transportrollen (3) aufweist.

9. Vorrichtung nach Anspruch 6, **dadurch gekennzeichnet, dass** die auf der Flüssigkeitsoberfläche aufliegende Seite einer Folgeplatte (8) eine durchgehend glatte Oberfläche aufweist.

## Claims

1. Method for controlling a device for the removal of liquid materials from several supply containers and the supply of these materials to a mixing device,
wherein a following plate (8) is disposed on the surface of the liquid,
wherein material is removed from the supply container (4) via a dipper piston pump, which is driven via a pneumatic cylinder by a motor (11), and supplied to the mixing device,
wherein the quantity of material removed per unit of time is determined via the cycle of the dipper piston pump,
**characterised in that**
the cycle is controlled in dependence upon the filled level of the supply container and in dependence upon the viscosity of the material to be supplied.

2. Method according to claim 1, **characterised in that** the filled level is measured immediately after degassing, and this information is passed to a pulse frequency generator, whereupon the pulse frequency generator calculates the pulse frequency of each individual motor (11) according to the ratio of the individual filled levels relative to one another in such a manner that both supply containers (4) are emptied at the same time.

3. Method according to claim 1 or 2, **characterised in that** a control unit calculates the quantitative ratio of the components and monitors the observance of specified tolerance thresholds.

4. Method according to claim 1, 2 or 3, **characterised in that** sensors measure the filled level of each supply container (4) continuously throughout the emptying process, and that the control unit recognises deviations in the filled levels relative to one another, which are not attributable to the originally-set pulse frequency as such and causes a follow-on adjustment of the pulse frequencies.

5. Method according to any one of claims 1 to 4, **characterised in that** the pressure, applied to the following plates (8) is dependent upon the viscosity of the material to be supplied.

6. Device for the complete emptying of supply containers containing liquid materials and the supply of these materials to a mixing device for injection-moulding equipment, consisting of a frame (1), standing platform (2) for accommodation and transportation of the supply containers (4), a holding device (7) for the following plates (8) and dipper piston pumps (10) complete with motors (11), following plates (8), which rest on the surfaces of the liquids and dipper piston pumps (10), which are driven via pneumatic cylinders by motors (11), **characterised in that**
the device comprises sensors for current investigation of the filled levels of the supply containers (4), a calculation and control unit, which determines the current pulse frequency of the motors (11) on the basis of the current filled levels of the supply containers (4) and a display device for displaying the current residual quantity in the supply containers (4) and their relationship to one another.

7. Device according to claim 6, **characterised in that** a data memory is provided, which continuously records the data from the sensors.

8. Device according to claim 6, **characterised in that** the standing platform (2) for the supply containers (4) comprises regions (5) offset in their height for the installation of transport rollers (3).

9. Device according to claim 6, **characterised in that** the side of a following plate (8) disposed on the surface of the liquid has a continuous smooth surface.

## Revendications

1. Procédé de commande d'un dispositif pour décharger des matériaux liquides de plusieurs réservoirs et pour conduire ces substances vers un dispositif de mélange, une plaque suiveuse (8) étant placée sur la surface du liquide, et le matériau étant déchargé du réservoir (4) par une pompe de puisage à piston entraînée par un moteur (11) par l'intermédiaire d'un vérin pneumatique, puis conduit au dispositif de mélange, la quantité du matériau déchargé par unité de temps étant réglée par le cadencement de la pompe de puisage à piston,
**caractérisé en ce que**
le cadencement est commandé en fonction du niveau de remplissage dans le réservoir et en fonction de la viscosité du matériau de base.

2. Procédé selon la revendication 1,
**caractérisé en ce que**
le niveau de remplissage est déterminé immédiatement après la purge et cette information est transmise à un capteur de fréquence d'impulsion, le capteur de fréquence d'impulsion calculant alors la fréquence d'impulsion de chacun des moteurs (11) en fonction du rapport des différents niveaux de remplissage les uns par rapport aux autres, de telle sorte que les deux réservoirs (4) soient vidés en même temps.

3. Procédé selon la revendication 1 ou 2,
**caractérisé en ce qu'**
une unité de commande calcule le rapport quantitatif des composants et surveille le respect des limites de tolérance prédéterminées.

4. Procédé selon la revendication 1, 2 ou 3,
**caractérisé en ce que**
des capteurs mesurent continuellement pendant l'opération de vidage le niveau de remplissage de chaque réservoir (4), la commande identifiant en tant que tels les écarts des niveaux de remplissage les uns par rapport aux autres, qui ne peuvent pas être déduits de la fréquence d'impulsion initialement réglée, et provoque un réajustement des fréquences d'impulsion.

5. Procédé selon l'une quelconque des revendications 1 à 4,
**caractérisé en ce que**
la pression appliquée sur les plaques suiveuses (8) est fonction de la viscosité du matériau de base.

6. Dispositif pour le vidage complet de réservoirs contenant un matériau liquide et pour le transfert de ces matériaux à un dispositif de mélange pour des installations de machines de coulée par injection, comprenant un châssis (1), une plaque d'appui (2) pour recevoir et transporter le réservoir (4), un dispositif de support (7) pour des plaques suiveuses (8) et des pompes de puisage à piston (10) y compris des moteurs (11), des plaques suiveuses (8) placées sur les surfaces des liquides, et des pompes de puisage à piston (10) entraînées par des moteurs (11) par l'intermédiaire de vérins pneumatiques,
**caractérisé en ce que**
le dispositif comprend des capteurs pour la détection permanente du niveau de remplissage des réservoirs (4), une unité de calcul et de commande, qui sur la base des niveaux de remplissage actuels des réservoirs (4) détermine la fréquence d'impulsion actuelle des moteurs (11), et un dispositif d'affichage pour indiquer la quantité résiduelle actuelle dans les réservoirs (4) et le rapport réciproque de celles-ci.

7. Dispositif selon la revendication 6,
**caractérisé en ce qu'**
une mémoire de données est prévue qui enregistre continuellement les données de capteur.

8. Dispositif selon la revendication 6,
**caractérisé en ce que**
la plaque d'appui (2) pour les réservoirs (4) présente des zones (5) décalées au niveau de leur hauteur pour le montage de rouleaux de transport (3).

9. Dispositif selon la revendication 6,
**caractérisé en ce que**
la face d'une plaque suiveuse (8) placée sur la surface du liquide présente une surface entièrement plane.
